(19) Europäisches Patentamt
European Patent Office
Office européen des brevets

(11) Veröffentlichungsnummer: **0 525 601 A1**

# (12) EUROPÄISCHE PATENTANMELDUNG

(21) Anmeldenummer: **92112477.2**

(22) Anmeldetag: **21.07.92**

(51) Int. Cl.5: **C09D 151/08**, C08L 51/08, C08F 283/10, //(C08F283/10, 220:58)

(30) Priorität: **24.07.91 DE 4124453**

(43) Veröffentlichungstag der Anmeldung: **03.02.93 Patentblatt 93/05**

(84) Benannte Vertragsstaaten: **BE DE ES FR GB IT NL**

(71) Anmelder: **Herberts Gesellschaft mit beschränkter Haftung**
**Christbusch 25**
**W-5600 Wuppertal 2(DE)**

(72) Erfinder: **Patzschke, Hans-Peter, Dr.**
**Am Heckendorn 71**
**W-5600 Wuppertal 2(DE)**
Erfinder: **Blum, Joachin, Dr.**
**Überfelderstrasse 8**
**W-5630 Remscheid(DE)**
Erfinder: **Friederichs, Gerhard**
**Am Heckendorn 5**
**W-5600 Wuppertal 2(DE)**
Erfinder: **Bogdan, Wolfgang**

**Verstorben(DE)**
Erfinder: **Lüttenberg, Albrecht**
**Dönberger Strasse 136**
**W-5600 Wuppertal 1(DE)**

(74) Vertreter: **Hrabal, Ulrich, Dr.**
**Türk, Gille, Hrabal, Leifert Brucknerstrasse 20**
**W-4000 Düsseldorf 13(DE)**

## (54) Mit olefinisch ungesättigten Hydroxyalkylamiden und/oder deren Alkylethern gepfropfte Epoxidharze, deren Herstellung und Verwendung als vernetzende filmbildende Bindemittel.

(57) Vernetzendes filmbildendes Bindemittel für Beschichtungssysteme, erhältlich durch Pfropfcopolymerisation in einem oder mehreren Lösemitteln von

A) 10 bis 60 Gewichtsteilen eines oder mehrerer Hydroxylalkyl- und/oder Alkoxyalkylamide von $\alpha,\beta$-olefinisch ungesättigten Mono- und/oder Dicarbonsäuren, wobei die Hydroxy- oder Alkoxygruppe direkt an das an den Amidstickstoff gebundene Kohlenstoffatom der Alkylgruppe gebunden ist, die im Gemisch mit einem oder mehreren radikalisch polymerisierbaren, ethylenisch ungesättigten Monomeren, die keine sauren Gruppen aufweisen, vorliegen können, unter Zusatz von 0,5 bis 15 Gew.% eines oder mehrerer Radikalinitiatoren, bezogen auf das Gewicht der eingesetzten Monomeren in Gegenwart von

B) 40 bis 90 Gewichtsteilen eines oder mehrerer urethangruppenfreier Epoxidharze mit einem Epoxidäquivalentgewicht von 180 bis 5000,

wobei sich die Gewichtsteile von A) und B) zu 100 Gewichtsteilen addieren ; Verfahren zu dessen Herstellung und dessen Verwendung in wasserverdünnbaren Beschichtungsmitteln.

EP 0 525 601 A1

Die Erfindung betrifft vernetzende filmbildende Bindemittel für Beschichtungssysteme, insbesondere wäßrige Beschichtungssysteme, insbesondere wäßrige Beschichtungssysteme, die sich besonders günstig zur Lackierung von Dosen, insbesondere Nahrungsmittel- und Getränkedosen, eignen. Die erfindungsgemäßen Bindemittel basieren auf Pfropfcopolymerisaten von Epoxidharzen.

Für die Lackierung von Dosen, insbesondere für Nahrungsmittel- und Getränkezwecke, sind Überzugsmittel erforderlich, die eine besonders gute Haftung auf Metallsubstraten, wie Stahl, insbesondere aber auch verzinnten Blechen und Aluminium, haben. Die Beschichtung muß störungsfrei erfolgen können und zu mechanisch und chemisch beständigen Überzügen führen.

Pfropfpolymerisate auf der Basis von Epoxidverbindungen werden in der DE-OS 17 70 619 beschrieben. Als Pfropfgrundlage werden Hydroxylgruppen enthaltende Epoxidverbindungen verwendet, deren Hydroxylgruppen zumindest 5 % durch ein lichtbeständiges Monoisocyanat umgesetzt sind. Auf diese Verbindungen können verschiedenste Monomeren aufgepfropft werden, unter denen auch Methacrylsaureamid-N-methylol-methylether aufgeführt ist. Die erhaltenen Pfropfpolymerisate dienen als Stabilisatoren und Weichmacher für Polyvinylchlorid und können auch in lösemittelhaltigen Überzugsmitteln eingesetzt werden. Die Dosenlackierung mit wäßrigen Überzugsmitteln wird nicht beschrieben. Ähnliche Zusammensetzungen werden in der DE-OS 17 69 593 beschrieben. Sie werden als lufttrocknende oder mit Polyamin härtende lösungsmittelhaltige Zusammensetzungen eingesetzt.

Aufgabe der vorliegenden Erfindung ist die Bereitstellung eines reaktiven vernetzenden filmbildenden Bindemittels, das in wäßrige Beschichtungssysteme eingearbeitet werden kann und daß zu besonders gut haftenden mechanisch und chemisch beständigen Überzügen führt, die für die Dosenlackierung verwendet werden können.

Die Herstellung eines solchen vernetzenden Bindemittels gelingt durch radikalische Pfropfcopolymerisation von gegebenenfalls im Gemisch mit einem oder mehreren weiteren radikalisch polymerisierbaren, ethylenisch ungesättigten Monomeren vorliegenden olefinisch ungesättigten Hydroxy-bzw. Alkoxyalkylamid-Monomeren, wobei die Hydroxy- und Alkoxygruppe direkt an das an den Amidstickstoff gebundene Kohlenstoffatom der Alkylgruppe gebunden ist, in Gegenwart organisch gelöster und gegebenenfalls modifizierter urethangruppenfreier Epoxidharze, wobei die Monomerenmischung frei von sauren Monomeren ist.

Gegenstand der Erfindung sind daher vernetzende filmbildende Bindemittel auf Epoxidharzbasis, erhältlich durch Pfropfcopolymerisation in einem oder mehreren Lösemitteln von

A) 10 bis 60 Gewichtsteilen eines oder mehrerer Hydroxylalkyl- und/oder Alkoxyalkylamide von $\alpha,\beta$-olefinisch ungesättigten Mono- und/oder Dicarbonsäuren, wobei die Hydroxy- oder Alkoxygruppe direkt an das an den Amidstickstoff gebundene Kohlenstoffatom der Alkylgruppe gebunden ist, die im Gemisch mit einem oder mehreren radikalisch polymerisierbaren, ethylenisch ungesättigten Monomeren, die keine sauren Gruppen aufweisen, vorliegen können unter Zusatz eines Radikalinitiators, dessen Anteil bezogen auf die eingesetzten Monomeren 0,5 bis 15 Gew.% beträgt, in Gegenwart von

B) 40 bis 90 Gewichtsteilen eines oder mehrerer urethangruppenfreier Epoxidharze mit einem Epoxidäquivalentgewicht von 180 bis 5000, wobei sich die Gewichtsteile von A) und B)zu 100 Gewichtsteilen addieren.

Die Monomeren der Komponente A) bestehen zumindest zu 30 Gew%, bevorzugt 30 bis 90 Gew%, aus einem oder mehreren olefinisch ungesättigten Hydroxy- und/oder Alkoxyalkylamiden, wobei die Hydroxy- oder Alkoxygruppe direkt an das an den Amidstickstoff gebundene Kohlenstoffatom der Alkylgruppe gebunden ist. Die Differenz des zu 100 Gew% fehlenden Anteils der Komponente A) kann durch mindestens ein weiteres radikalisch polymerisierbares, ethylenisch ungesättigtes säuregruppenfreies Monomeres ausgefüllt werden. Der Anteil der Hydroxy- und/oder Alkoxyalkylamide ist dabei jedoch jeweils so groß, daß in 100 Gewichtsteilen der Gesamtzusammensetzung (Summe der Komponenten A) und B)) jeweils mindestens 5 Gewichtsteile davon vorliegen.

In der Komponente A werden bevorzugt radikalisch polymerisierbare, olefinisch ungesättigte Hydroxy- bzw. Alkoxyalkylamid-Monomere der allgemeinen Formel:

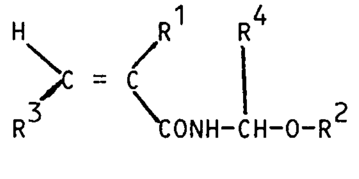

(I)

worin

$R^1$ = H, $C_nH_{2n+1}$, wobei n = 1 bis 4, bevorzugt n = 1,
$R^2$ = H, $C_pH_{2p+1}$, wobei p = 1 bis 4 mit linearer oder verzweigter Kette,
$R^3$ = H,

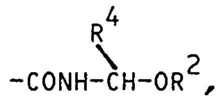

bevorzugt H,
$R^4$ = wie für $R^1$ angegeben, bevorzugt H, wobei die Reste $R^4$ gleich oder verschieden sein können,

eingesetzt. Die Monomeren der Formel I können an der olefinischen Doppelbindung in der E- und/oder Z-Konfiguration vorliegen.

Bevorzugt sind Hydroxy- bzw. Alkoxyalkylamide von Acrylsäure und Methacrylsäure mit der vorstehenden allgemeinen Formel (I).

Bei den den Amiden zugrundeliegenden Hydroxy- bzw. Alkoxyalkylaminen handelt es sich bevorzugt um Methylolamine oder Alkoxymethylamine, wobei die Methylengruppe durch $C_1$-$C_4$-Alkyl substituiert sein kann. Die Hydroxy- bzw. Alkoxyalkylamid-Monomeren der Komponente A) sind somit bevorzugt methylol- und/oder methyloletherfunktionell.

Die Alkoxygruppe weist bevorzugt 1 bis 4 C-Atome auf.

Beispiele für bevorzugte olefinisch ungesättigte Alkoxyalkylamide sind n-Butoxymethylacrylamid, Isobutoxymethylacrylamid und die entsprechenden Methacrylamide.

Als weitere ethylenisch ungesättigte Monomere zur möglichen Mitverwendung in der Komponente A) kommen praktisch alle radikalisch polymerisierbaren Monomeren in Frage. Es sind z.B. solche geeignet, die dem Q- und e-Schema nach Alfrey und Price für die Copolymerisation (vgl. z.B. Brandrup und Immergut, Polymer Handbook, 3rd Edition, John Wiley and Sons, New York, 1989) entsprechen. Solche Monomere sind beispielsweise:

a) Radikalisch polymerisierbare Monomere, die keine weiteren reaktiven Gruppen enthalten, deren Auswahl nach den mechanischen Eigenschaften des Films und der Verträglichkeit der dabei eingesetzten Harzkombination erfolgen kann. Es werden Acrylsäure-alkylester, Methacrylsäure-alkylester, Maleinsäure- und/oder Fumarsäure-dialkylester eingesetzt, wobei die Alkylreste aus 1 bis 20 Kohlenstoffatomen bestehen und in linearer oder verzweigter aliphatischer Kette und/oder als cycloaliphatischer und/oder (alkyl)aromatischer Rest angeordnet sind. "Harte" Monomere mit einer hohen Glasübergangstemperatur als Homopolymere sind beispielsweise Monomere vom Vinylaromatentyp wie Styrol, α-substituierte Styrole wie α-Methylstyrol, o-, m- und p-Alkylstyrol wie Vinyltoluol oder p-tert-Butylstyrol, halogenierte Vinylbenzole, wie o-oder p-Chlorstyrol, Methacrylsäureester mit kurzer Kette, wie Methylmethacrylat, Ethylmethacrylat, Propylmethacrylat, Butylmethacrylat, Cyclohexylmethacrylat, Isobornylmethacrylat, Dihydrodicyclopentadienylmethacrylat, (Meth)acrylamid oder auch (Meth)acrylnitril. "Weiche" Monomere sind dagegen Acrylsäureester mit einer langen Alkanolkette wie n-Butylacrylat, Isobutylacrylat, tert.-Butylacrylat, 2-Ethylhexylacrylat und/oder Laurylacrylat. Es können auch ungesättigte Ether, wie Ethoxyethyl(meth)acrylat oder Tetrahydrofurfuryl(meth)acrylat eingesetzt werden. Bevorzugt werden (Meth)acrylsäurealkylester und/oder (Alkyl)Styrol als Monomer eingesetzt.

b) Einpolymerisierbare, hydroxylgruppenhaltige Monomere, die außer einer polymerisierbaren ethylenisch ungesättigten Gruppe noch mindestens eine Hydroxygruppe an einem Kohlenwasserstoffgerüst enthalten. Es sind hauptsächlich ungesättigte Veresterungsprodukte der allgemeinen Formel

R''-CH = CR'-X-R''' (II)

worin
R' = $-C_nH_{2n+1}$, bevorzugt -Ch$_3$, oder -H
R'' = R' oder $-XC_nH_{2n+1}$
R''' = eine lineare oder verzweigte $C_{1-6}$-Alkylgruppe mit 1 bis 3 OH-Gruppen
X = -COO- und
n = 1 bis 6, bevorzugt 1 ist;

wobei die Gruppen R' gleich oder verschieden sein können.

Besonders geeignet sind (Meth)acrylsäure-hydroxyalkylester wie beispielsweise Hydroxyethylacrylat, β-Hydroxypropylmethacrylat, 1,4-Butandiol-4-monoacrylat, Propylenglykolmonoacrylat, 2,3-Dihydroxypropylmethacrylat, Pentaerythrit-monomethacrylat, Polypropylenglykol-monoacrylat oder auch Fumarsäure-dihydroxyalkylester, deren lineare, verzweigte oder cyclische Alkylgruppe 2 bis 20 Kohlenstoffatome enthält. Besonders bevorzugt werden Hydroxyalkylester der Methacryl- bzw. Acrylsäure eingesetzt. Besonders elastische Eigenschaften sind beim Einsatz eines Reaktionsprodukts von Hydroxyalkyl(meth)acrylat mit $\epsilon$-Caprolacton zu erhalten.

Die in der vorliegenden Beschreibung verwendete Silbe "(Meth)acryl-" bedeutet jeweils "Methacryl-" und/oder "Acryl-".

Monomere vom Vinylestertyp, vorzugsweise Vinylester $\alpha$-verzweigter Monocarbonsäuren, besonders der Versaticsäurevinylester oder auch N-Vinylpyrrolidon können auch einpolymerisiert werden, wenn geeignete Reaktionsbedingungen und Reaktionscomonomere ausgewählt werden.

Die zusätzlich verwendbaren ethylenisch ungesättigten Monomeren können für sich allein oder aber auch kombiniert zur Herstellung der Copolymeren eingesetzt werden. Darüberhinaus können auch gegebenenfalls geringe Anteile zwei- oder mehrfach ungesättigter Comonomerer, z.B. in Mengen von 0,1 bis 10 Gew.%, vorzugsweise 1 bis 5 Gew.%, bezogen auf die Gesamtmenge der Monomeren, verwendet werden.

Beispiele solcher zwei- oder mehrfach ungesättigter Monomerer sind Methylen-bis-acrylamid, Oligoethylenglykol-bis-acrylamid, Butandioldiacrylat, Hexandioldimethacrylat und Divinylbenzol, Reaktionsprodukte aus Diisocyanaten und ungesättigten Alkoholen oder veretherten Methylol(meth)acrylamiden mit OH- oder COOH-funktionellen Monomeren, sowie Reaktionsprodukte von ungesättigten Glycidylverbindungen mit carboxylgruppenhaltigen Monomeren, und Trimethylolpropantriacrylat. Bevorzugt werden die zweifach ungesättigten Verbindungen.

Die Epoxidharze der Komponente B), die erfindungsgemäß als Propfgrundlage dienen, sind frei von Urethangruppen. Die Epoxidgruppen können teilweise oder vollständig mit gegenüber Epoxidgruppen reaktiven Verbindungen modifiziert sein. Die Harze weisen ein Epoxidäquivalentgewicht von 180 bis Unendlich, bevorzugt bis 5000 auf.

Die Modifikation erfolgt unter Ringöffnung des Epoxidrings durch Additionsreaktion. Beispiele für derartige gegenüber Epoxidgruppen reaktive Verbindungen sind Verbindungen mit mindestens einer aktiven Wasserstoff enthaltenden Gruppe pro Molekül, wie Mercaptoverbindungen, Alkohole, Phenole, Wasser, Carbonsäuren, primäre und sekundäre Amine.

Solche Epoxidharze der Komponente B), in deren Anwesenheit die Polymerisation oder Copolymerisation der Monomeren der Komponente A) erfolgt, sind beispielsweise epoxidgruppenhaltige Polyglycidylether mit der folgenden idealisierten allgemeinen Formel geeignet:

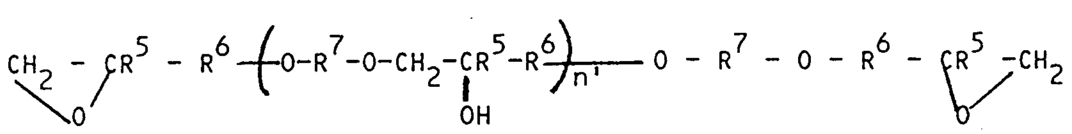 (III)

worin

$R^5$ = Alkyl mit der Formel $-C_{m'}H_{2m'+1}$ und/oder bevorzugt -H;

$R^6$ = $-(CR^5{}_2)_{m'}-$, bevorzugt $-CH_2-$;

wobei die Reste $R^5$ gleich oder verschieden sein können;

$R^7$ =

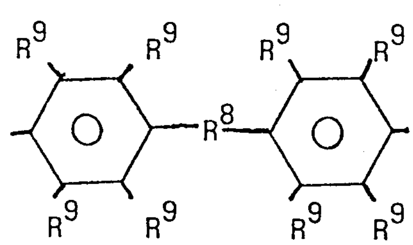

$R^8$ = $-SO_2-$ , -O- , bevorzugt $-CR_2{}^9-$ ;

$R^9$ = Halogen oder $R^5$, wobei die Reste $R^9$ gleich oder verschieden sein können,

n' = 0 bis 15, bevorzugt 6 bis 13 ;

m' = 1 bis 8, bevorzugt 1.

Besonders geeignete Beispiele sind Reaktionsprodukte verschiedener Molmasse aus Dihydroxy-diphenylpropan (Bisphenol A) oder Dihydroxydiphenylmethan (Bisphenol F) und Epichlorhydrin und/oder Methylepichlorhydrin. Produkte mit höherer Molmasse können auch nach anderen Verfahren hergestellt werden, wie Umsetzung von flüssigen Polyepoxiden mit Bisphenol A. Diese Polyglycidylether haben ein Epoxid-Äquivalentgewicht von 180 bis 5000, besonders von 1500 bis 5000 speziell 2000 bis 4000. Sie weisen bevorzugt eine gewichtsmittlere Molmasse von 300 bis 8000 auf. Sie können teilweise oder vollständig hydriert sein oder in Gemischen mit unterschiedlichem Epoxid-Äquivalentgewicht oder mit unterschiedlicher Struktur eingesetzt werden. Geeignet sind auch Polyglycidylether von phenolischen Novolakharzen, wodurch die Funktionalität von 2 bis auf etwa 6 Glycidylgruppen pro Molekül gesteigert werden kann. Die Funktionalität der Harze kann dabei durch Reaktion mit monofunktionellen (Alkyl)phenolen oder Monocarbonsäuren, bevorzugt $\alpha$-verzweigten Monocarbonsäuren herabgesetzt werden. Zum Elastifizieren kann ein Teil des beschriebenen Polyglycidylethers durch aliphatische Polyglycidylether der Formel

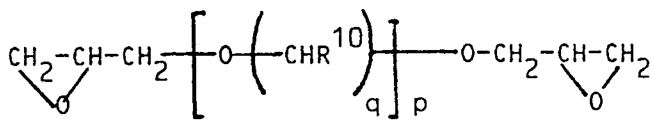

(IV)

ersetzt werden, wobei $R^{10}$ = H oder ein niedriger, gegebenenfalls mit verschiedenen Substituenten versehener Alkylrest ist und q = 2 bis 6 und p = 3 bis 50 bedeutet. Beispiele sind Reaktionsprodukte von Epichlorhydrin mit Polypropylenglykol oder Polybutylenglykol verschiedener Molmasse. Die Epoxidharze können auch durch Reaktion mit längerkettigen Dicarbonsäuren, wie Isophthalsäure, Cyclohexandicarbonsäure, Adipinsäure oder Sebacinsäure oder durch Reaktion mit langkettigen Polyalkoholen wie Hexandiol-1,6, Glycerin, Monoanhydropentaerythrit, Polytetrahydrofurandiol, Polycaprolactondiol, Polycarbonatdiol, Polyurethandiol, Polycaprolactamdiol oder Polybutadiendiol, modifiziert sein oder stufenweise hergestellt werden.

Die Herstellung der erfindungsgemäßen, gepfropfte Epoxidharze enthaltenden vernetzenden Bindemittel erfolgt so, daß man eine entsprechende Monomerenmischung wie unter A) definiert, in Gegenwart eines geeigneten Radikalinitiators mit einem Epoxidharz, wie unter B) definiert, in einem oder mehreren Lösemittel umsetzt.

Die Menge an verwendetem Radikalinitiator beträgt hierbei bis zu 15 Gew.%, z.B. 0,5 bis 15 Gew.% bezogen auf die eingesetzten Monomeren, bevorzugt über 2, besonders bevorzugt über 4 Gew.% bezogen auf die Monomeren. Die obere Grenze der Initiatormenge liegt bei 15 Gew.%, bevorzugt bei 12, besonders bevorzugt bei 8 Gew.%. Als Radikalinitiatoren können die in der makromolekularen Chemie üblichen Verbindungen wie organische Peroxide oder organische Azoverbindungen verwendet werden, jedoch sind die organischen Peroxide bevorzugt.

Beispiele sind Peroxide wie Dialkylperoxide, z.B. Di-tert-butylperoxid; Diacylperoxide, z.B. Dibenzoylperoxid; Peroxodicarbonate, z.B. Di-sec-butyl-peroxodicarbonat; Peroxidester, z.B. 2-Ethylhexansäure-tert-butyl-perester; Hydroperoxide, wie Cumolhydroperoxid; Ketonperoxide, wie Methylethylketonperoxid.

Beispiele für Azoverbindungen sind Azodinitrile, wie z.B. Azobisisobutyronitril und die entsprechend substituierten Verbindungen. Besonders geeignete Initiatoren für die Pfropfpolymerisation stellt die Klasse der Diacylperoxide dar. Besonders bevorzugt wird Dibenzoylperoxid eingesetzt.

Die Herstellung erfolgt in einem Lösemittel bzw. Lösemittelgemisch. Bevorzugt werden mit Wasser mischbare Lösemittel eingesetzt. Beispiele für solche Lösemittel sind in Wasser lösliche, organische Verbindungen, wie lineare, verzweigte oder cycloaliphatische Alkohole, Alkylen- oder Polyethylenglykole, deren Mono- oder Diether oder -ester, Ketoalkohole oder cyclische Ether, wie z.B. n-Butanol, sec-Butanol, Butoxyethanol, Dipropylenglykoldimethylether, Ethylglykolacetat, Diacetonalkohol, Tetrahydrofuran oder Dioxan. Es können jedoch auch mit Wasser nicht mischbare Lösemittel eingesetzt werden, wie z.B. aromatische und aliphatische Kohlenwasserstoffe, wie Benzol, Toluol oder Xylol.

Die für die Herstellung verwendete Lösemittelmenge hängt von den jeweils eingesetzten Ausgangsstoffen ab. Sie wird so gewählt, daß eine brauchbare Verarbeitungsviskosität des erhaltenen Endprodukts erzielt wird. Im allgemeinen erhält man diese bei einem Festkörpergehalt von beispielsweise bis zu 70 Gew.% des Endproduktes.

Zur Herstellung wird das Epoxidharz im Lösemittel oder Lösemittelgemisch gelöst und mit den Monomeren und dem Radikalinitiator versetzt, worauf die Reaktion durch Erwärmen eingeleitet wird. Der Zusatz von Monomeren und Initiator kann im Gemisch oder getrennt erfolgen. Bevorzugt wird das Monomer/Initiator-Gemisch langsam verteilt über eine längere Zeit bei Reaktionstemperatur zugetropft, damit die Konzentration an Monomeren relativ klein ist.

Die Reaktion wird bei den üblichen, dem Fachmann bekannten Temperaturen durchgeführt, die an die Halbwertzeit des verwendeten Initiators angepaßt werden, z.B. im Bereich von 60 bis 180°C. Mit Dibenzoylperoxid kann die Reaktion beispielsweise bei 100 bis 140°C, besonders bevorzugt bei 110 bis 130°C durchgeführt werden.

In dem erfindungsgemäßen vernetzenden Bindemittel (Pfropfcopolymerisat aus A) und B)) beträgt die Menge der Epoxidharzkomponente bezogen auf Festharz 20 Gew% und mehr, bevorzugt mehr als 40 Gew% und bis zu 95 Gew%, bevorzugt bis zu 90 Gew%. Besonders gute vernetzende Bindemittel erhält man bei einem Gewichtsanteil von 60 bis 90 Gew% Epoxidharz. Besonders bevorzugt beträgt der Anteil an Epoxidharz 70 bis 80 Gew%. Der restliche Gewichtsanteil wird aus den eingesetzten ungesättigten Monomeren sowie aus den eingebauten Spaltprodukten des Radikalinitiators gebildet.

Das Zahlenmittel der Molmasse des erfindungsgemäßen Pfropfcopolymerisats beträgt von 1000 bis 30000, bevorzugt über 3000, bevorzugt bis 20000, besonders bevorzugt bis 10000.

Die Pfropfcopolymerisate können als vernetzende filmbildende Bindemittel für verschiedene Beschichtungsmittel Verwendung finden.

Beispielsweise lassen sich mit dem erfindungsgemäßen vernetzenden Bindemittel überraschenderweise wasserverdünnbare Beschichtungsmittel formulieren, die sich aus dem erfindungsgemäßen vernetzenden Bindemittel zusammen mit einem säurefunktionellen Bindemittel bzw. gegebenenfalls einer Kombination mehrerer säurefunktioneller Bindemittel und gegebenenfalls weiteren Vernetzerkomponenten zusammensetzen, wobei die wäßrigen Beschichtungsmittel ungewöhnlich niedrige Gesamtsäurezahlen, bezogen auf Festharz, aufweisen. Daher werden nur geringe Mengen an Neutralisationsmittel benötigt, was hinsichtlich Umweltschutz und Arbeitshygiene beim Umgang mit diesen Beschichtungsmitteln einen großen Vorteil darstellt.

Aufgrund des weitgehend linearen Aufbaus des erfindungsgemäßen vernetzenden Bindemittels auf Epoxidharzbasis eignen sich damit hergestellte wasserverdünnbare Beschichtungsmittel zur Herstellung flexibler, elastischer Lackfilme.

Als säurefunktionelle Bindemittel können zusammen mit dem erfindungsgemäßen vernetzenden Bindemittel beispielsweise solche eingesetzt werden, die eine Säurezahl, bezogen auf Festharz, von 10 bis 250, bevorzugt über 30 und unter 100, aufweisen. Die säurefunktionellen Bindemittel weisen bevorzugt eine Hydroxylzahl von 15 bis 400 auf. Das Zahlenmittel der Molmasse liegt bevorzugt bei 500 bis 20000. Beispiele für verwendbare säurefunktionelle Bindemittel sind säurefunktionelle Epoxidharze, wie phosphorsäurefunktionelle oder COOH-funktionelle Epoxidharze, Epoxidharzacrylcopolymere, die Säurefunktionen aufweisen, zugleich OH- und COOH-funktionelle Polyester und/oder Polyacrylatharze, sowie zugleich OH- und COOH-funktionelle Polyurethane. Bevorzugt werden auf säurefunktionellen Epoxidharzen basierende Bindemittel eingesetzt, weil Beschichtungen mit besonders guten Eigenschaften erhalten werden.

Im folgenden sind Beispiele für säurefunktionelle filmbildende Bindemittel angegeben, die erfindungsgemäß zusammen mit dem vernetzenden Bindemittel eingesetzt werden können.

Carboxylgruppenhaltige ölfreie Polyester, wie sie beispielsweise in der DE-OS 32 13 160 beschrieben werden. Es handelt sich um carboxylgruppenhaltige, ölfreie Polyester mit einer Säurezahl von 30 bis 150, einer Hydroxylzahl von 20 bis 150 und einer Patton'schen Alkydkonstante von 0,9 bis 1,2, die einkondensiert enthalten

a) zwei- und/oder mehrwertige aliphatische und/oder cycloaliphatische gesättigte Polyalkohole,

b) aliphatische und/oder cycloaliphatische und/oder monocyclische aromatische zwei- und/oder mehrbasische Polycarbonsäuren, und

c) gegebenenfalls lineare und/oder verzweigte, gesättigte, und/oder ungesättigte, aliphatische und/oder cycloaliphatische $C_3$ bis $C_{20}$-Monoalkohole.

Weitere Beispiele hierfür sind carboxylgruppenhaltige ölfreie Polyester mit einer Säurezahl von 30 bis 150, einer Hydroxylzahl von 20 bis 150, einer Patton'schen Alkydkonstante von 0,9 bis 1,2 und einem mittlerem Molekulargewicht ($\overline{M}n$) von etwa 1500 bis 5000, vorzugsweise von etwa 2000 bis 3500, gemessen gegen Polystyrol als Eichsubstanz, wie sie z. B. in der US-A-3 053 783 oder DE-A 28 24 418 beschrieben werden. Sie werden aus zwei- und/oder mehrwertigen aliphatischen und/oder cycloaliphatischen gesättigten Polyalkoholen, aliphatischen, cycloaliphatischen und/oder monocyclischen aromatischen zwei- und/oder mehrbasischen Carbonsäuren und gegebenenfalls linearen und/oder verzweigten, gesättigten und/oder ungesättigten, aliphatischen und/oder cycloaliphatischen $C_3$ bis $C_{20}$-Monoalkoholen polykondensiert. Die Mengenverhältnisse der Ausgangskomponenten errechnen sich unter Verwendung der Patton'schen Alkydkonstante aus den Molverhältnissen, die zu den geforderten Säurezahlen und Hydroxylzahlen des Harzes führen. Die Auswahl der einzelnen Ausgangskomponenten ist dem Fachmann unter Berücksichtigung dieser Zielsetzung bekannt.

Die Herstellung dieser Polyester erfolgt in an sich bekannter Weise durch Polykondensation der

Ausgangsstoffe. Zur Vermeidung von Trübungen oder Gelbildungen wird bevorzugt stufenweise gearbeitet.

1. Die Veresterung von aromatischen und cycloaliphatischen Dicarbonsäuren, die bevorzugt kein intramolekulares Anhydrid bilden können, erfolgt bevorzugt mit Dialkoholen, die entweder sekundäre OH-Gruppen oder durch $\beta$-Substitution sterisch behinderte primäre OH-Gruppen enthalten, wobei durch Alkoholüberschuß ein OH-gruppenhaltiger Polyester entsteht. Die Alkohole enthalten vorzugsweise 2 bis 21, besonders bevorzugt 4 bis 8 C-Atome. Die Dicarbonsäuren enthalten vorzugsweise 5 bis 10 C-Atome, besonders bevorzugt 6 C-Atome. Beispiele hierfür sind Isophthalsäure und Terephthalsäure, 1,3- und 1,4-Cyclohexandicarbonsäure oder alkylsubstituierte Dicarbonsäuren wie Butylisophthalsäure. Besonders bevorzugt wird Isophthalsäure. Zum Erzielen von Verzweigungen kann ein Teil der Dicarbonsäuren durch eine entsprechende Menge Tricarbonsäure wie Trimellithsäureanhydrid in das Harzmolekül über alle Carboxylgruppen einkondensiert werden. Andererseits können auch Dimethylester wie Terephthalsäuredimethylester oder 1,4-Cyclohexandicarbonsäuredimethylester durch Umesterung eventuell in Gegenwart von Umesterungskatalysatoren in den Polyester eingeführt werden.

Als Dialkohole werden bevorzugt eingesetzt Neopentylglykol, Hydroxypivalinsäureneopentylglykolester, Hexandiol-2,5, 1,4-Bis-(hydroximethyl)-cyclohexan, 1,1-Isopropyliden-bis-(p-phenoxi)-2-propanol, 2.2.4-Trimethylpentandiol-1.3. Als Dialkohol kann auch der Glycidylester von $\alpha$-verzweigten Fettsäuren, wie Versaticsäure verwendet werden, weil die Fettsäure hydrolysestabil in den Molekülverband eingebaut ist. In Spezialfällen ist auch der Einsatz von Epoxyharzen möglich, deren Epoxygruppen mit Monoalkoholen umgesetzt worden sind. Ein anteilweiser Einsatz von Polyolen mit mehr als zwei OH-Gruppen wie Trimethylolpropan oder Pentaerythrit ist zum Einstellen geeigneter OH-Zahlen und Viskositäten möglich. Das gleiche gilt für eine geringfügige Modifizierung zur Elastifizierung mit langkettigen Dialkoholen wie Hexandiol-1,6 oder von aliphatischen Dicarbonsäuren wie Adipinsäure. Die Veresterung dieses Vorkondensats wird in bekannter Weise azeotrop oder in der Schmelze bei erhöhten Temperaturen (über 190°C) vorgenommen und liefert ein klares Produkt mit einer Säurezahl von 0 bis 50, besonders 5 bis 25 und einer Viskosität von 200 bis 3000 mPas bei 25°C gemessen in 75%iger Butylglykol-Lösung.

2. Um die Löslichkeit im wäßrigen alkalischen Medium zu ermöglichen, können in die OH-haltigen Polyester zusätzlich Carboxylgruppen eingeführt werden. Dazu erfolgt eine Umsetzung bei Temperaturen bis zu 250°C mit einer aromatischen, aliphatischen oder cycloaliphatischen Dicarbonsäure, die gegebenenfalls durch Defunktionalisierung mit einem langkettigen, aliphatischen hydrophoben Monoalkohol aus einer Polycarbonsäure mit drei oder vier Carboxylgruppen entstanden ist. Besonders einfach gestaltet sich das Verfahren bei Einsatz von anhydridhaltigen Verbindungen wie Trimellithsäureanhydrid, Pyromellithsäureanhydrid oder entsprechenden hydrierten Ringsystemen, sowie Cyclopentantetracarbonsäureanhydrid oder Pyrazintetracarbonsäureanhydrid. Die Polycarbonsäuren werden stufenweise umgesetzt, daß eine Dicarbonsäure erhalten bleibt, die anschließend zu dem OH-gruppenhaltigen Polyester bei Temperaturen von etwa 150 bis 190°C zugegeben wird.

Die Herstellung der Polyester kann aceotrop oder in der Schmelze bei Reaktionstemperaturen zwischen etwa 150 bis 240°C, bevorzugt zwischen 160 bis 210°C erfolgen. Nach Erreichen der gewünschten Abstellwerte (Viskosität, Säurezahl) wird auf etwa 100 bis 120°C abgekühlt und mit glykolischen oder alkoholischen Lösemitteln wie Butoxyethanol, Ethoxyethanol, Diethylenglykol-dimethylether, Methoxypropanol, Diacetonalkohol, sek.-Butanol und Isopropanol verdünnt, um eine verarbeitungsfähige Lösung mit möglichst hohem Festkörper zu ergeben.

Weitere Beispiele sind saure Polyurethanharze mit einer Säurezahl von 15 bis 150 und einer Hydroxylzahl von 20 bis 150. Sie können in ähnlicher Weise wie die Polyester bei niedrigeren Temperaturen durch Reaktion von

a) zwei- und/oder mehrwertigen aliphatischen und/oder cycloaliphatischen gesättigten Polyalkoholen mit

b) aliphatischen und/oder cycloaliphatischen und/oder aromatischen zwei- und/oder mehrwertigen Polyisocyanaten mit

c) gegebenenfalls linearen und/oder verzweigten, aliphatischen und/oder cycloaliphatischen $C_3$ bis $C_{20}$-Monoalkoholen

hergestellt werden. Bevorzugt werden Polyesterurethanharze mit einer Säurezahl von 15 bis 50. Sie werden hergestellt durch Reaktion von bevorzugt Diisocyanaten mit Polyalkoholen bei Temperaturen von 20 bis 150°C im Überschuß. Als Polyalkohol wird dabei ein höhermolekularer, hydroxylgruppenhaltiger saurer Polyester oder ein Gemisch aus einem carboxylgruppenfreien OH-Polyester und einem niedrigmolekularen Dialkohol, der zusätzlich eine zur Anionengruppenbildung befähigte Säuregruppe enthält, eingesetzt. Hierfür wird bevorzugt Dimethylolpropionsäure eingesetzt.

Weitere Beispiele sind (Meth)acrylcopolymerisate bevorzugt mit einer Säurezahl von 20 bis 150, einer Hydroxylzahl von 15 bis 400 und einem zahlenmittlerem Molekulargewicht ($\overline{M}n$) von 2000 bis 20000.

Die (Meth)acrylcopolymerisate werden im allgemeinen hergestellt durch radikalische Polymerisation in

Masse oder Lösung, gegebenenfalls in Gegenwart von Polymerisationsreglern.

Die Säurezahl liegt bei Harzen mit hoher Hydroxylzahl niedriger als bei niedriger Hydroxylzahl. Die obere Grenze der Säurezahl liegt bevorzugt unter 100; die untere Grenze der Säurezahl liegt bevorzugt über 40. Die obere Grenze der Hydroxylzahl liegt bevorzugt unter 250, die untere Hydroxylzahl liegt bevorzugt über 30. Das zahlenmittlere Molekulargewicht ($\overline{M}n$) beträgt bei dem Lösungspolymerisat bevorzugt 2500 bis 8000. Das (Meth)acrylcopolymerisat wird zweckmäßig hergestellt aus 3 bis 30 Gew.%, $\alpha,\beta$-ungesättigten Monocarbonsäuren, wie (Meth)acrylsäure, $\alpha,\beta$-ungesättigten Dicarbonsäurehalbestern wie z. B. Malein- oder Fumarsäure-monoethylester, 5 bis 65 Gew.% $\alpha,\beta$-ungesättigen Hydroxyalkyl(meth)-acrylsäureestern mit wenigstens einer primären und/oder sekundären Hydroxylgruppe wie z. B. Hydroxypropyl(meth)acrylat oder 1,4-Butandiol-monoacrylat. Der auf 100 Gew.% fehlende Anteil besteht aus Comonomeren, die außer der reaktiven Doppelbindung keine weiteren reaktiven Gruppen enthalten, wie Styrol, Vinyltoluol, $\alpha$-Methylstyrol oder (Meth)acrylsäureestern, die durch Veresterung mit einem gesättigten, linearen oder verzweigten $C_1$ bis $C_{18}$-Alkohol hergestellt wurden. Die Hydroxylgruppen können auch durch Reaktion des carboxylgruppenhaltigen Copolymerisates mit Alkylenoxiden wie Ethylenoxid, Propylenoxid oder Butylenoxid hergestellt werden. Die "Lösungspolymerisation" wird in wassermischbaren Lösemitteln wie Ethoxyethanol, n-Butanol oder Isobutanol oder in Wasser nichtlösbaren Lösemitteln wie Xylol bei Temperaturen von etwa 80 bis 145°C unter Zusatz von radikalischen Initiatoren durchgeführt. Nach Auspolymerisieren des Ansatzes kann gegebenenfalls das Lösemittel bei Temperaturen von etwa 60 bis 120°C gegebenenfalls unter Anlegen von Vakuum abdestilliert werden. Nach dem Neutralisieren wird mit Wasser verdünnt.

Weitere Beispiele sind saure Epoxidharz-Phosphorsäureester bevorzugt mit einer Säurezahl von 10 bis 150, hergestellt aus einem epoxidgruppenhaltigen Polyglycidylether mit mehr als 1,3 Epoxidgruppen pro Molekül und mit einem Epoxidäquivalentgewicht von 180 bis 5000, bevorzugt über 2000.

Es ist bevorzugt, wenn die Säurezahl des Epoxidharz-Phosphorsäureesters 10 bis 40 beträgt. Der saure Epoxidharz-Phosphorsäureester hat bevorzugt ein Zahlenmittel des Molekulargewichts von 2500 bis 7000.

Als säurefunktionelles Bindemittel eignet sich beispielsweise ein neutralisiertes Reaktionsprodukt von Phosphorsäure, besonders Orthophosphorsäure mit epoxidgruppenhaltigen Polyglycidylethern. Sie werden in bekannter Weise z. B. nach der DE-A-27 57 733 (US-A-1 164 487 und US-A-4 289 812) hergestellt. Unter Polyglycidylether im Rahmen dieser Erfindung werden vorzugsweise Harze der allgemeinen idealisierten Formel III, die vorstehend angegeben wurde, verstanden.

Beispiele sind Reaktionsprodukte verschiedenen Molekulargewichts aus Dihydroxy-diphenylpropan (Bisphenol A) oder Dihydroxy-diphenylmethan (Bisphenol F) und Epichlorhydrin und/oder Methylepichlorhydrin. Produkte mit höheren Molekulargewichten können auch nach anderen Verfahren hergestellt werden, wie Umsetzung von niedrigen Polyepoxiden mit Bisphenol A.

Sie können teilweise oder vollständig hydriert sein oder in Gemischen mit unterschiedlichem Epoxidäquivalentgewicht oder mit unterschiedlicher Stuktur eingesetzt werden. Geeignet sind auch Polyglycidylether von phenolischen Novolakharzen, wodurch die Funktionalität von 2 bis auf etwa 6 Glycidylgruppen pro Molekül gesteigert werden kann. Die Funktionalität der Harze kann auch durch Reaktion mit monofunktionellen (Alkyl)phenolen oder Monocarbonsäuren, bevorzugt $\alpha$-verzweigten Monocarbonsäuren herabgesetzt werden. Zum Elastizifizieren kann ein Teil des beschriebenen Polyglycidylethers durch aliphatische Polyglycidylether der vorstehend angegebenen Formel IV ersetzt werden.

Beispiele sind Reaktionsprodukte von Epichlorhydrin mit Polypropylenglykol oder Polybutylenglykol verschiedenen Molekulargewichts. Die Epoxidharze können auch durch Reaktion von längerkettigen Dicarbonsäuren wie Isophthalsäure, Cyclohexandicarbonsäure, Adipinsäure oder Sebacinsäure mit langkettigen Polyalkoholen wie Hexandiol-1,6, Glycerin, Monoanhydropentaerythrit, Polytetrahydrofurandiol, Polycaprolactondiol, Polycaprolactamdiol oder Polybutadiendiol, sowie NCO-terminisierten Reaktionsprodukten aus Polyalkoholen und Polyisocyanaten oder halbblockierten Diisocyanaten modifiziert sein oder stufenweise hergestellt werden, wobei jedoch urethangruppenfreie Epoxidharze bevorzugt sind.

Die Umsetzung wird üblicherweise mit 70 bis 90%igen wäßrigen Phosphorsäure-Lösungen in einem geschlossenen Druckgefäß während 3 bis 6 Stunden bei Temperaturen von 110 bis 130°C durchgeführt, wobei etwa 0,3 bis 1,2 Phosphorsäure-Gruppen, bevorzugt weniger als 1 Phosphorsäure-Gruppe pro Oxiranring eingesetzt werden. Es werden z. B. etwa 0,5 bis 3 g Phosphorsäure mit 100 g Epoxidharz umgesetzt.

Weitere bevorzugte Beispiele sind carboxylgruppenhaltige Epoxidharze. Sie werden durch Addition von cyclischen Anhydriden an die Hydroxylgruppen des Epoxidharzes oder durch Addition von Polycarbonsäuren oder Aminocarbonsäuren an die Epoxidgruppe des Epoxidharzes erhalten.

Ein bevorzugtes Verfahren ist die Pfropfpolymerisation mit $\alpha,\beta$-ungesättigten Carbonsäuren gegebenenfalls in Gegenwart von anderen ungesättigten Monomeren, z. B. (Meth)acrylsäureestern und/oder

(substituierten) Vinylaromaten. Man stellt vorzugsweise Epoxidharz-Pfropfpolymerisate mit einer Säurezahl von 30 bis 200 her, ausgehend von einem epoxidgruppenfreien, fettsäurefreien Polyglycidylether. Diese epoxidgruppenfreien Polyglycidylether sind Reaktionsprodukte von Polyglycidylethern mit einer Funktionalität von mehr als 1,3 Epoxidgruppen pro Molekül und einem Epoxidäquivalentgewicht von 1000 bis 5000 mit H-aciden Verbindungen. Hierbei können zunächst im wesentlichen alle Oxiranringe mit einer H-aciden Verbindung umgesetzt werden. Diese sind monofunktionelle Verbindungen, die keine Molekülvergrößerung bewirken, wie Benzoesäure oder tert.-Butylphenol oder Phenylphenol und/oder Monoalkohole. Bei Einsatz von bifunktionellen H-aciden Verbindungen wie Isophthalsäure oder Bisphenol A tritt eine Molekülvergrößerung ein. Die Steigerung des Molekulargewichts wird dabei durch die eingesetzten Mengenverhältnisse gesteuert.

Die Pfropfung am aliphatischen C-Atom des modifizierten Epoxidharzes, das in organischen Lösemitteln wie Butanol oder Butoxyethanol gelöst ist, tritt bei Temperaturen von 110 bis 130°C bei Zusatz von mehr als 3 Gew.%, bevorzugt 4 bis 8 Gew.% Benzoylperoxid oder ähnlich wirkenden Initiatoren ein. Um die Pfropfungspolymerisation zu unterstützen, werden bevorzugt Epoxidharze mit einem höheren Epoxidäquivalentgewicht wie beispielsweise 2000 bis 4000 ausgewählt. Es werden mindestens 1,5, bevorzugt mindestens 10 Gewichtsteile Monomermischung auf 100 Gewichtsteile Epoxidharz eingesetzt. Überlegene Eigenschaften erhält man, wenn Epoxidharzmengen von mehr als 50 Gew.%, bevorzugt zwischen 60 und 90 Gew.% enthalten sind. Die Herstellung dieser Produkte ist beispielsweise in der DE-A-27 21 822 und DE-A-27 21 823 (US-PS-4 308 185 und 4 212 781) beschrieben. Bevorzugt werden acrylierte Epoxidharze, die nur mit Acrlysäure oder Methacrylsäure und Styrol pfropfpolymerisiert sind.

Es können auch phosphorsäurefunktionelle ungesättigte Monomere, gegebenenfalls im Gemisch mit anderen ungesättigten Monomeren aufgepfropft werden, wie in der DE-Patentanmeldung 40 19 030 beschrieben und im nachfolgenden Beispiel 5 erläutert.

Um besonders gute Eigenschaften für Dosenlackierung zu bekommen, kann es günstig sein, die vorstehend beschriebenen säurefunktionellen Harze mit einem Formaldehyd-Kondensationsharz zu präkondensieren. Beispielsweise kann hierzu eine Umsetzung mit Resolen aus ein- oder mehrkernigen Phenolen erfolgen. Solche Resole sind handelsübliche Vernetzer, wie sie später als zusätzliche Vernetzer beschrieben werden. Die Präkondensation kann entweder durch Erwärmen a) der sauren Harzlösungen in organischen Lösemitteln mit Formaldehyd-Kondensationsharzen auf Temperaturen von 50 bis 150°C oder b) der neutralisierten wäßrigen Harzlösungen bei Temperaturen von 40 bis 95°C im alkalischen Medium durchgeführt werden.

Es können auch phenolharzmodifizierte, carboxylgruppenhaltige, ölfreie Polyester mit einer Säurezahl von bevorzugt 15 bis 175, besonders bevorzugt 30 bis 70, und einer OH-Zahl von bevorzugt 15 bis 175 hergestellt werden.

Solche Harze sind beispielsweise in der AT-A-280 605, DE-A-26 38 464 und/oder EP-B-0 062 786 beschrieben.

Zur Herstellung der carboxylgruppenhaltigen phenolharzmodifizierten Polyester können Polyole oder hydroxylgruppenhaltige Vorkondensate mit vorzugsweise 2 bis 4 OH-Gruppen pro Molekül mit höhermolekularen hydroxylgruppenhaltigen Phenolestern so umgesetzt werden, daß sie durch Neutralisation in eine wasserverdünnbare Form überführt werden können. Um optimale Eigenschaften zu erreichen, ist es günstig, wenn die eingesetzten Polyesterharze ein mittleres Molekulargewicht Mn von mindestens 1500 aufweisen und jeweils 0,3 bis 3, vorzugsweise 0,8 bis 2 Hydroxyl- und Carboxyläquivalente pro 1000 g Polyester enthalten. Hierbei werden in bekannter Weise aus Polyalkoholen, wie Hexandiol-1,6, Neopentylglykol, Cyclohexandimethanol, Trimethylolpropan, Glycerin und/oder Pentaerythrit, und Polycarbonsäuren, wie Adipinsäure, Isophthalsäure, Cyclohexan-1,4-dicarbonsäure, oder Trimellithsäureanhydrid Polyester-Vorprodukte hergestellt, die keine ungesättigten Fettsäuren enthalten. Diese ölfreien Polyester werden bei Abwesenheit von sauren Katalysatoren mit ein- oder mehrkernigen Phenolen, besonders Alkylphenolen, bei 60 bis 160°C, besonders 100 bis 130°C, und mit Aldehyden umgesetzt. Bevorzugte Phenole sind Monoalkylphenole, wie p-tert.-Butylphenol, p-Cumylphenol, Nonylphenol, Phenylphenol oder Bisphenol A (1,1-Bis-4-hydroxyphenyl-propan), die in Mengen von 0,5 bis 50 Gew.% eingebaut werden. Besonders günstige Ergebnisse bezüglich der Resistenzeigenschaften der eingebrannten Filme gegen aggressive Lösemittel werden bei teilweisem oder vollständigem Ersatz der genannten Phenole durch Phenolcarbonsäuren erzielt. Hierzu geeignet sind z. B. 4,4-Bis-(4-hydroxyphenyl)pentansäure, Glykolsäurederivate von Diphenolen, wie das 2-(4-Hydroxyphenyl)-2-(carbäthoxyphenyl)propan, oder Salicylsäure. Als Aldehyd wird, wie in der Phenolharzchemie üblich, vorzugsweise Formaldehyd in einer Menge von 0,5 bis 3 Mol pro Mol phenolischer Hydroxylgruppe zugesetzt.

Das erfindungsgemäße säuregruppenfreie vernetzende Bindemittel wird in Mengenanteilen von bis zu 90 Gew%, bevorzugt bis zu 85 Gew%, bezogen auf Festharz eingesetzt, wobei die Untergrenze bevorzugt

bei 20 Gew%, besonders bevorzugt bei 40 Gew%, liegt. Die sauer funktionalisierten Bindemittel bzw. die Kombination mehrerer sauer funktionalisierter Bindemittel machen bezogen auf die Festharzzusammensetzung 10 bis 80 Gew%, bevorzugt 15 bis 60 Gew% und besonders bevorzugt unter 40 Gew%, aus.

Ein Zusatz geringer Mengen üblicher Vernetzerharze, wie Formaldehyd-Kondensationsharze, von bis zu 10 Gew.%, bevorzugt von bis zu 5 Gew%, beispielsweise 1 bis 10 Gew% oder 1 bis 5 Gew%, bezogen auf Festharz, zur Lackformulierung ist möglich, um Beschichtungen mit einem besonders ausgewogenen Verhältnis zwischen Elastizität und Beständigkeit gegen Methyl-ethyl-keton zu erzielen. Diese Mengen sind jedoch sehr gering im Vergleich mit üblichen Lacksystemen, in denen Mengen von 10 bis 40 Gew% zum Einsatz kommen. Die Vernetzerharze können, wie vorstehend beschrieben, auch mit den säurefunktionellen Bindemitteln präkondensiert werden.

Übliche Vernetzerharze im vorstehend genannten Sinn sind z.B. teilweise oder vollständig veretherte Amin-Formaldehyd-Kondensationsharze und/oder teilweise oder vollständig veretherte Phenol-Formaldehyd-Kondensationsharze und/oder blockierte Polyisocyanate mit mindestens zwei reaktiven Stellen pro Molekül. Das Vermischen erfolgt entweder vor der Neutralisation in der organischen Phase oder in der neutralisierten wäßrigen Dispersion bevorzugt bei Raumtemperatur oder durch kurzzeitiges Erhitzen auf bis zu 150°C, bevorzugt bis zu 90°C.

Im folgenden werden Beispiele für zusätzlich zum erfindungsgemäßen vernetzenden Bindemittel verwendbare Vernetzer angegeben: Amin-Formaldehyd-Kondensationsharze, die beispielsweise durch Reaktion von Aldehyden mit Harnstoff, N-Alkylharnstoff, Dicyandiamid, verschiedenen Triazinen, wie Melamin, Benzoguanamin und Acetoguanamin oder ihren Mischungen entstehen. Die Aldehyde können dabei monofunktionell, aber auch polyfunktionell sein. Beispiele hierfür sind Formaldehyd und seine Polymerisationsprodukte, wie Paraformaldehyd, Polyoxymethylen, Trioxan oder aliphatische und cyclische Aldehyde, wie Glyoxal, Acetaldehyd, Acrolein, Propionaldehyd, Butyraldehyd und Furfural. Je nach Reaktionsbedingungen (pH-Wert, Temperatur) und Methylolierungsgrad werden Harze mit verschiedenen Molmassen und unterschiedlicher Reaktivität erhalten. Die Kondensation mit Formaldehyd, Furfural, Paraformaldehyd, Polyoxymethylen oder Trioxan wird im allgemeinen unter Zusatz von schwachen Säuren oder Basen als Katalysator ausgeführt. Starke Säuren werden beispielsweise verwendet bei Kondensation mit Acrolein, Glyoxal, Acetaldehyd, Propionaldehyd oder Butyraldehyd. Hierbei wird das primäre Reaktionsprodukt neutralisiert, dann Aldehyd zugesetzt und unter Zusatz von schwachen Säuren oder Basen weiter reagiert. Der bevorzugte Aldehyd ist Formaldehyd. Die Alkoholgruppen, bevorzugt Methylolgruppen, der Aldehyd-Kondensationsprodukte werden teilweise oder bevorzugt vollständig mit Alkoholen verethert. Es werden solche Amin-Formaldehydharze bevorzugt, deren Hauptmenge an Methylolgruppen mit Monoalkoholen oder deren Gemischen umgesetzt ist. Besonders bevorzugt werden Methanol, Ethanol, Propanol, Butanol, Heptanol, Benzylalkohol und andere aromatische Alkohole, cyclische Alkohole, sowie Ethoxyethanol oder Butoxyethanol. Sollen Alkohole mit mehr als 4 C-Atomen eingebaut werden, so wird die Methylolgruppe erst mit einem niedrigeren Alkohol verethert und anschließend der höhere Alkohol durch Umetherung eingeführt. Die bevorzugten Alkohole sind niedere aliphatische Monoalkohole, wie Methanol und/oder Butanol und seine Isomeren. Besonders bevorzugt werden Melaminharze, die mit 3 bis 6 Molen Formaldehyd umgesetzt und anschließend vollständig mit Methanol verethert sind. Die Harze werden nach dem Stand der Technik hergestellt und von vielen Firmen als Verkaufsprodukte angeboten. Bei Veretherung mit Hydroxycarbonsäuren wie Hydroxybenzoesäure, Salicylsäure oder Dimethylolpropionsäure entstehen carboxylgruppenhaltige, bei Verwendung von Hydroxy-alkyl(meth)acrylaten oder Allylalkohol ungesättigte Melaminharztypen. Es können auch übliche carbamylmethylierte Melaminharze eingesetzt werden, die durch Reaktion von alkoxymethylierten Melaminharzen mit Alkylcarbamaten unter schwach sauren Bedingungen hergestellt werden.

Beispiele für bevorzugte Phenolharze, die als Vernetzer dienen können, sind Reaktionsprodukte von Phenol oder substituierten Phenolen mit verschiedenen Aldehyden im molaren Überschuß in Gegenwart alkalischer Katalysatoren (Resol-Typ). Beispiele für phenolische Verbindungen sind Phenol, Kresol, Xylenol, Resorcin und substituierte Phenole wie p-tert-Butylphenol, p-tert-Amylphenol, p-Phenyl-phenol, Isothymol, Cardanol oder auch mehrkernige Phenole wie Dihydroxydiphenylpropan (Bisphenol A) oder Dihydroxydiphenylmethan (Bisphenol F). Als Ausgangsmaterial dienen auch phenolische Novolakharze, die gegebenenfalls mit Monocarbonsäuren, bevorzugt α-verzweigten Monocarbonsäuren, Monophenolen, die besonders mit $C_2$ bis $C_{18}$-Alkylgruppen substituiert sind oder auch Monoepoxiden wie α-Monoepoxidalkane, Monoglyceridether oder Monoglyceridester, defunktionalisiert werden. Als Aldehyde finden Verwendung Formaldehyd und seine Polymerisationsprodukte wie Paraformaldehyd, Trioxymethylen, Polyformaldehyd oder auch Hexamethylentetramin. Gut geeignet sind Acetaldehyd, Paraldehyd und Metaldehyd, sowie Butyraldehyd oder Furfural. Die Methylolgruppen werden teilweise oder bevorzugt vollständig verethert mit Methanol, Ethanol, Propanol und/oder Butanol. Bevorzugt werden Harze, die pro phenolischer OH-Gruppe

mit überschüssigem Formaldehyd, d.h. etwa 1,1 bis 2,5 Mol Formaldehyd in alkalischem Medium umgesetzt werden. Harze auf Basis Bisphenol A, die mit etwa 4 Formaldehyd-Molekülen umgesetzt und vollständig mit Butanol verethert sind, werden besonders bevorzugt. Es können sowohl wasserunlösliche, wie auch carboxylgruppenhaltige Phenolharze verschiedener Molmassen verwendet werden. Hierfür geeignete Phenolcarbonsäuren sind beispielsweise 4,4-Bis(4-hydroxyphenyl)-pentansäure, Glykolsäurederivate von Bis-phenolen, wie das 2-(4-Hydroxyphenyl)-2(carbethoxyphenyl)-propan, oder Salicylsäure. Gegebenenfalls können auch sehr niedrigmolekulare, gegebenenfalls ungesättigte, Methylolphenolether eingesetzt werden wie Trimethylolphenolallylether (Methylonharze, Warenzeichen).

Eine weitere Gruppe von Beispielen für Vernetzungsmittel stellt die Klasse der verkappten Isocyanate dar. Als verkappte Isocyanate können beliebige Isocyanate verwendet werden, bei denen die Isocyanatgruppen mit einer Verbindung umgesetzt worden sind, die aktiven Wasserstoff enthält. Die verkappten Isocyanate reagieren bei erhöhter Temperatur, in der Regel zwischen etwa 90 und 220°C mit den Filmbildnern. Blockierte Polyisocyanate werden z.B. dadurch hergestellt, daß man ein multifunktionelles Isocyanat mindestens mit einer stöchiometrischen Menge an einer monofunktionellen, aktiven Wasserstoff (Zerewitinoff-Reaktion) enthaltenden Verbindung zweckmäßig bei Temperaturen von 50 bis 80°C umsetzt, wobei gegebenenfalls übliche Katalysatoren, wie basische Katalysatoren, wie tertiäre Amine und/oder geringe Mengen an Zinnsalzen, wie Dibutylzinndilaurat, zugegeben werden können. Als Isocyanate werden Polyisocyanate oder entsprechende isocyanatgruppenhaltige Prepolymere verwendet. Die organischen Polyisocyanate weisen eine mittlere Molmasse von 112 bis 5000, bevorzugt 140 bis 1000, und zweckmäßig eine mittlere Isocyanatfunktionalität von 2 bis 8 auf. Geeignete Polyisocyanate sind beispielsweise Verbindungen der idealisierten Formel

$$E(N=C=O)_s \qquad (V)$$

in welcher

E für einen aromatischen, gegebenenfalls mit einem oder mehreren Alkylgruppen substituierten oder Methylenbrücken aufweisenden Kohlenwasserstoffrest mit insgesamt 6 bis 15 Kohlenstoffatomen, einen aliphatischen Kohlenwasserstoffrest mit 2 bis 18, vorzugsweise 6 bis 10 Kohlenstoffatomen, einen cyclischen Kohlenwasserstoffrest mit 6 bis 15 Kohlenstoffatomen oder einen heterocyclischen Ring und

s für eine Zahl von 2 bis 5, vorzugsweise 2 bis 3, steht.

Typische Beispiele für derartige Polyisocyanate sind Propylendiisocyanat, Ethylethylendiisocyanat, Dimethylethylendiisocyanat, Trimethylendiisocyanat, Pentamethylendiisocyanat, Hexamethylendiisocyanat, Trimethylhexandiisocyanat, 1,12-Dodecandiisocyanat, 1,18-Octadecandiisocyanat, Cyclopentandiisocyanat, Cyclohexan-1,3- und 1,4-diisocyanat, sowie beliebige Gemische dieser Isomeren, Methylcyclohexandiisocyanat,m- oder p-Tetramethylxyloldiisocyanat, 1-Isocyanato-3,3,5-trimethyl-5-isocyanatomethyl-cyclohexan, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Xylylendiisocyanat, Diphenylmethan-2,4'- und/oder -4,4'-diisocyanat, 3,2'- und/oder 3,4'-Diisocyanato-4-methyldiphenylmethan, Bisphenylendiisocyanat, Naphthylen-1,5-diisocyanat, Triphenylmethan-4,4',4''-triisocyanat, 2,2',4,4'-Tetraisocyanato-5,5'-dimethyltriphenylmethan, Diphenyltetraisocyanat oder Naphthyltetraisocyanat. Gemischt aliphatische/aromatische Verbindungen sind auch geeignet. Besonders bevorzugt werden großtechnisch erzeugte Diisocyanate wie Toluylendiisocyanat, Hexandiisocyanat, Isophorondiisocyanat oder Dicyclohexylmethan-diisocyanat. Außer den beispielhaft genannten, niedermolekularen Polyisocyanaten können auch die in der Polyurethanchemie bekannten höhermolekularen Isocyanat-Polymere auf Basis urethangruppenfreier Polyisocyanate und höhermolekularer Polyhydroxyverbindungen als Polyisocyanatkomponente eingesetzt werden. Zweckmäßig werden hierbei (n + 1) Mol der oben beschriebenen Diisocyanate mit n Mol einer gegenüber Isocyanat reaktiven difunktionellen Verbindung bei Temperaturen von zweckmäßig 50 bis 120°C in der Schmelze oder in Gegenwart inerter Lösemittel umgesetzt, die sowohl niedrigmolekular als auch hochmolekular mit einer Molmasse von 62 bis 5000, bevorzugt 90 bis 1000, sein können. Arbeitet man mit einem Überschuß an Diisocyanat, so muß das überschüssige Isocyanat wieder abdestilliert werden. Als niedermolekulare Dialkohole werden zweckmäßig die verschiedenen Isomere von linearen, verzweigten und cyclischen Kohlenstoffverbindungen mit 2 bis 20 Kohlenstoffatomen und zwei sekundären und/oder primären Hydroxylgruppen verstanden. Typische Beispiele hierfür sind Butandiol-1,4, Hexandiol-1,6, Trimethylhexandiol, Bis-(hydroxymethyl)cyclohexan, Neopentylglykol, Hydroxypivalinsäureneopentylglykolester, N-Methyl-diethanolamin oder Bis-ethoxyliertes Bisphenol A. Geeignete höhermolekulare Polyhydroxylverbindungen sind die aus der Polyurethanchemie bekannten Polyesterdiole, Polycaprolactondiole, Polycaprolactamdiole, Polycarbonatdiole, Polyurethandiole und Polyglykoletherdiole. Verwendet werden können auch langkettige primäre

und sekundäre Diamine, wie Hexandiamin-1,6, Addukte von 2 Mol Glycidylether oder Glycidylester an Hexandiamin, N,N'-Cyanethylethylendiamin oder Bis-N,N'-Cyanethylpolyoxypropylendiamin.

Als Polyisocyanate sind besonders gut die sogenannten "Lackpolyisocyanate" geeignet, die aus bekannten Diisocyanaten hergestellt werden. So entsteht aus Hexandiisocyanat und Wasser das Tris-(6-isocyanatohexyl)-biuret. Durch Trimerisation von Hexandiisocyanat erhält man Tris-(6-isocyanatohexyl)-isocyanurat, gegebenenfalls im Gemisch mit seinen höheren Homologen, sowie weiteren aus Isophorondiisocyanat, Diisocyanatotoluol oder Gemischen aus Diisocyanatotoluol und Hexamethylendiisocyanat aufgebauten Isocyanuratgruppen aufweisenden Polyisocyanaten. Sehr gut einsetzbare Polyisocyanate sind auch die Urethangruppen aufweisenden Polyisocyanate, die beispielsweise durch Umsetzung von überschüssigen Mengen an 2,4-Diisocyanatotoluol mit einfachen, mehrwertigen Alkoholen der Molmasse 62 bis 300, insbesondere Trimethylolpropan und gegebenenfalls destillative Entfernung des nicht umgesetzten Diisocyanatüberschusses erhalten werden können. So werden beispielsweise blockierte Triisocyanate oder blokkierte höhermolekulare Reaktionsprodukte von Triisocyanaten mit Dialkoholen besonders bevorzugt. Bei dieser Umsetzung werden zweckmäßig ungefähr folgende Molverhältnisse eingehalten:
Triisocyanat : Diol : Schutzgruppe wie y : (y-1) : (y+2), wobei y = 1 bis 6, bevorzugt 2 bis 3 ist. Mittel, die die Isocyanate blockieren, enthalten nur eine einzige Amin-, Amid-, Imid-, Lactam-, Thio- oder Hydroxylgruppe. Im allgemeinen werden flüchtige, aktiven Wasserstoff enthaltende Verbindungen mit niedrigen Molmassen, vorzugsweise von nicht mehr als 300, mehr bevorzugt von nicht mehr als 200, verwendet. So haben sich beispielsweise bewährt: aliphatische oder cycloaliphatische Alkohole, wie n-Butanol, 2-Ehtylheaxanol, Cyclohexanol, Phenole, tertiär-Butylphenole, Dialkylaminoalkohole wie Dimethylaminoethanol, Oxime wie Methylethylketoxim, Lactame wie $\epsilon$-Caprolactam oder Pyrrolidon-2, Imide wie Phthalimid oder N-Hydroxy-maleinimid, Hydroxyalkylester, Malonsäure- oder Acetessigsäureester.

Es werden aber auch $\beta$-Hydroxyglykole oder -glykolether und Glykolamide empfohlen. Oxime und Lactame sind als Verkappungsmittel von besonderem Interesse, weil die damit verkappten Polyisocyanate bei relativ niedrigen Temperaturen reagieren. Zur Blockierung können auch mehr als eine Art von Schutzgruppe, bevorzugt solche mit unterschiedlicher Reaktivität, verwendet werden. Es ist so beispielsweise möglich, ein Gemisch von zwei oder mehreren unterschiedlich blockierten Polyisocyanaten zu verwenden oder ein Polyisocyanat einzusetzen, das mit zwei oder mehreren unterschiedlichen Schutzgruppen blockiert ist.

Wasserverdünnbarkeit der beschriebenen Bindemittelmischungen wird erreicht durch Neutralisation mit geeigneten Basen wie Alkalihydroxiden, Ammoniak und/oder organischen Aminen.

Bevorzugt sind tertiäre Amine und tertiäre Aminoalkohole. Bei der Verwendung von Ammoniak, primären und sekundären Aminen, müssen freie Epoxidgruppen, sofern noch vorhanden, vorher in üblicher Weise entfernt werden, z.B. durch Hydrolyse oder Reaktion mit H-reaktiven Verbindungen, wie z.B. Monophenolen, Mercaptanen, Monocarbonsäuren oder Monoalkoholen.

Beispiele für zur Neutralisation verwendbare Amine sind primäre, sekundäre und/oder tertiäre Alkylamine, wobei diese Amine gleiche oder unterschiedliche Alkyl- oder Alkanolreste enthalten. Spezielle Beispiele für Amine und Aminoalkohole sind Triethylamin, Diethylamin, Dimethylaminoethanol, Dimethylaminoisopropanol, Morpholin, N-Ethylmorpholin, Aminopropanol, Dimethylaminomethylpropanol, Diethanolamin und Triethanolamin.

Die neutralisierten Mischungen aus sauren Bindemitteln, erfindungsgemäßem vernetzendem Bindemittel sowie gegebenenfalls weiteren hinzukommenden Vernetzern werden nach der Neutralisation mit deionisiertem Wasser auf die gewünschte Applikationsviskosität verdünnt. Dabei werden Klarlacke mit einem Festkörper von 20 bis 50 Gew% erhalten.

Wurden bei der Herstellung mit Wasser nicht mischbare Lösemittel eingesetzt, so müssen diese nach Neutralisation und Verdünnen mit Wasser entfernt werden, z.B. durch Destillation.

Darüberhinaus können die wäßrigen Überzugsmittel Pigmente, Füllstoffe, organische Lösemittel sowie weitere lackübliche Additive enthalten. Sie - können einen Festkörper von 20 bis 50 Gew.% aufweisen.

Als Pigmente und Füllstoffe sind übliche anorganische oder organische Pigmente bzw. Füllstoffe geeignet. Im allgemeinen werden Pigmente und/oder Füllstoffe in derartigen Mengen eingesetzt, daß sich ein Verhältnis von Pigment zu Bindemittel von 0 bis 1,2 : 1, bezogen auf das Gewicht, ergibt.

Der Gesamtgehalt an Pigmenten, Füllstoffen und/oder weiteren Lackadditiven in dem wäßrigen Überzugsmittel beträgt bevorzugt bis zu 25 Gew.%, bezogen auf das Gewicht der gesamten wäßrigen Dispersion.

Als organische Lösemittel werden lackübliche Lösemittel zugesetzt, beispielsweise solche, wie sie bei der Herstellung der vernetzenden Bindemittel angegeben wurden. Der Lösemittelgehalt der erfindungsgemäßen wäßrigen Überzugsmittel kann beispielsweise bis zu 15 Gew.% betragen.

Lackübliche Additive sind dem Fachmann geläufig, es kann sich beispielsweise um Vernetzungskatalysatoren, Korrosionsschutzinhibitoren, Verlaufsmittel, Antischaummittel oder Verdickungsmittel handeln.

Die unter Verwendung der erfindungsgemäßen vernetzenden Bindemittel hergestellten wäßrigen Überzugsmittel können in üblicher Weise auf verschiedene Substrate aufgebracht werden, insbesondere auf Metallsubstrate, wie Stahl, verzinnte Bleche und Aluminium. Der Auftrag kann beispielsweise durch Tauchen, Spritzen oder durch elektrophoretische Beschichtung erfolgen. Unter Verwendung der erfindungsgemäßen vernetzenden Bindemittel hergestellte Überzüge können in dünnen Schichten zu festhaftenden mechanisch und chemisch beständigen Überzügen verarbeitet werden, beispielsweise durch Trocknung bei erhöhten Temperaturen von 120 bis 250°C.

Besonders geeignet sind die erfindungsgemäßen vernetzenden Bindemittel zur Herstellung von Überzugsmitteln für die Dosenlackierung. Die Eigenschaftsvorteile in Haftung und Beständigkeit gegen chemische Beanspruchung sind bei verzinntem Stahl besonders günstig. Es liegt daher eine besondere Eignung für die Lackierung von Dosen aus verzinnten Blechen vor. Bevorzugt werden die Überzugsmittel als Klarlacke ohne Zusatz von Pigmenten und/oder Füllstoffen hergestellt.

Das erfindungsgemäße vernetzende filmbildende Bindemittel kann auch als zusätzliche Vernetzerkomponente in durch Umetherungsreaktionen vernetzbaren Überzugsmitteln eingesetzt werden. Bevorzugt wird es eingesetzt in Kombination mit anderen Umetherungsvernetzern wie z. B. Aminoplastvernetzern. Beispiele sind neben den vorstehend erwähnten erfindungsgemäßen anionisch stabilisierten wäßrigen Überzugsmitteln kationisch stabilisierte wasserverdünnbare Lacksysteme sowie lösemittelbasierende Überzugsmittel.

Im Falle der wasserverdünnbaren Lacksysteme kann es sich um Spritzlacke und um elektrophoretisch abscheidbare Lacke handeln.

Beispiel 1

1839 g eines handelsüblichen Epoxidharzes auf Basis Bisphenol A mit einem Epoxidäquivalentgewicht von 2500 bis 4000 (Epikote 1009 der SHELL $^{R}$ ) werden in einer Mischung aus 519 g Butoxyethanol, 63 g Xylol und 949 g n-Butanol unter Erwärmen auf 122°C gelöst. In die klare, heiße Lösung wird unter Rühren und Inertgasstrom eine Monomerenmischung aus 282 g Styrol, 178 g n-Butoxymethylacrylamid, 10 g Isobutoxymethylacrylamid und 33 g Benzoylperoxid, gelöst in 126 g Butoxyethanol, innerhalb 2 Stunden zugetropft. Anschließend wird der Ansatz noch drei Stunden bei 122 ° C gehalten. Man erhält eine Harzlösung mit einem Festkörpergehalt von 55 Gew.-%. Das Zahlenmittel der Molmasse (Mn) ist 5600, das Gewichtsmittel (Mw) liegt bei 25000, jeweils gemessen in Tetrahydrofuran (THF) gegen Polystyrol.

Beispiel 2

919 g des Epoxidharzes aus Beispiel 1 werden in einer Mischung aus 259 g Butoxyethanol, 30 g Xylol und 475 g n-Butanol unter Erwärmen auf 120 ° C gelöst. Anschließend wird wie in Beispiel 1 verfahren unter Verwendung einer Monomerenmischung aus 47 g Styrol, 188 g n-Butoxymethylacrylamid und 16,4 g Benzoylperoxid, gelöst in 63 g Butoxyethanol. Man erhält eine Harzlösung mit einem Festkörpergehalt von 55,6 Gew.-%. Mn = 5600; Mw = 25000.

Beispiel 3

808 g des Epoxidharzes aus Beispiel 1 werden in einer Mischung aus 260 g Butoxyethanol, 10 g Xylol und 475 g n-Butanol unter Erwärmen auf 120 ° C gelöst. Anschließend wird wie in Beispiel 1 verfahren unter Verwendung einer Monomerenmischung aus 208 g Styrol, 139 g n-Butoxymethylacrylamid und 20 g Benzoylperoxid, gelöst in 63 g Butoxyethanol. Danach werden innerhalb 10 Min. 2 g Benzoylperoxid, gelöst in 20 g Xylol bei 125 ° C zugetropft und weitere 2 Stunden gehalten. Man erhält eine Harzlösung mit einem Festkörpergehalt von 55,4 Gew.-%.

Beispiel 4

Es wird analog zu Beispiel 3 verfahren, die Monomerenmischung setzt sich jedoch aus 69 g Styrol, 277 g n-Butoxymethylacrylamid und 20 g Benzoylperoxid, gelöst in 63 g Butoxyethanol zusammen. Man erhält eine Harzlösung mit einem Festkörpergehalt von 54,6 Gew.-%.

Beispiel 5

919,4 g eines handelsüblichen Epoxidharzes mit einem Epoxidäquivalentgewicht von 2.500-4.000

werden in einer Mischung aus 259,6 g Butylglykol, 474,4 g n-Butanol und 31,6 g Xylol unter Erwärmen auf 122 °C gelöst. In die klare, heiße Lösung wird unter Rühren und Inertgasstrom eine Monomerenmischung aus 93,5 g Methacroyloxyethylmonophosphat, 140,1 g Styrol, 1,8 g Ethylacrylat und 16,4 g Benzoylperoxid, gelöst in 63,2 g Butylglykol, innerhalb 2 Stunden zugetropft. Anschließend wird der Ansatz noch 3 Stunden bei 122 °C gehalten. Man erhält eine Harzlösung mit einer Säurezahl von 33 mg KOH/g bezogen auf Festharz.

Beispiel 6

960 g eines handelsüblichen Epoxidharzes mit einem Epoxidäquivalentgewicht von 2.500-4.000 werden in einer Mischung aus 320 g Butylglykol und 480 g n-Butanol unter Erwärmen auf 122 °C gelöst. In die klare, heiße Lösung wird unter Rühren und Inertgasstrom eine Monomerenmischung aus 156 g Methacrylsäure, 81,6 g Styrol, 2,0 g Ethylacrylat und 16,4 g Benzoylperoxid innerhalb 2 Stunden zugetropft. Anschließend wird der Ansatz noch 3 Stunden bei 122 °C gehalten. Man erhält eine Harzlösung mit einer Säurezahl von 85 mg KOH/g bezogen auf Festharz.

Es wurden Überzugsmittel hergestellt durch Neutralisierung und Verdünnen der Bindemittel aus Beispiel 5 (B5) (gemäß Beispiel 3 der DE-OS 40 19 030) und Beispiel 6 (B6) (analog DE-OS 27 21 822). Die Neutralisation erfolgte mit Dimethylethanolamin; verdünnt wurde mit Wasser. Anschließend wurden die in den vorstehenden Beispielen 1 bis 4 hergestellten erfindungsgemäßen vernetzenden Bindemittel auf Epoxypfropfpolymerharzbasis zugesetzt, wobei mit vollentsalztem Wasser auf einen Anteil von nichtflüchtigen Bestandteilen von etwa 32 - 36 Gew.-% verdünnt wurde. Die erhaltenen Überzugsmittel wurden auf Platten aus elektrolytisch verzinntem Blech auflackiert und die erhaltenen Filme wurden eingebrannt. Anschließend wurde die Haftung durch Gitterschnitt-Test geprüft. Die Elastizität wurde durch den Näpfchentiefzieh- und Sikkentest mit Erichsen-Geräten geprüft. Außerdem wurde die Vernetzung durch den Lösemittel-Wischtest untersucht. Weiter wurde auch die Pasteurisation nach 30 Min. bei 85°C geprüft.

Beispiel 7

| Rezeptur | |
|---|---|
| 29,3 T | (Gewichtsteile) B5 |
| 10,6 T | B6 |
| 1,0 T | Hexabutoxymethylmelamin (Melaminharz) |
| 1,6 T | Dimethylethanolamin |
| 34,1 T | vollentsalztes Wasser |

Die vorstehenden Bestandteile wurde eingewogen und miteinander vermischt. Das vollentsalzte Wasser wurde langsam zugefügt, wobei sich ein Wasserberg (Ansteigen der Viskosität) zeigte. Dann wurden 100 T des im Beispiel 4 hergestellten vernetzenden Bindemittels langsam und in 5 Portionen untergerührt, wobei der Wasserberg überschritten wurde. Die restliche Menge von 40 T vollentsalztem Wasser wurde langsam bis zum Erreichen einer Viskosität AK4-20°C von 40 - 60 sec (nach DIN 53211) zugegeben. Das Vernetzungsverhältnis (fest auf fest) betrug:

Harz von Beispiel 4: B5 : B6 : Melaminharz = 70 : 20 : 9 : 1.

Die Proben wurden auf elektrolytisch verzinntes Blech mit dem Rakel oder durch Verspritzen auf eine Trockenfilmstärke von 6 - 8 µm aufgetragen und 12 Min. bei 200°C im Umluftofen getrocknet. Der Gitterschnitt-Test ergab eine gute Haftung. Der Lösemittel-Wischtest mit Methyl-ethyl-keton ergab eine gute Beständigkeit von mehr als 50 Double Rubs.

Die Tiefziehfähigkeit, geprüft mit dem Erichsen-Näpfchenzieh-Gerät Typ 224 ist in Ordnung. Die Schlagbiegung (Schlagfaltprüfung) nach 5 Min. $CuSO_4$-Belastung ergab ein gutes Ergebnis.

Die Pasteurisation nach 30 Min. bei 85°C ist in Ordnung.

Beispiel 8

| Rezeptur | |
|---|---|
| 29,7 T | B5 |
| 10,8 T | B6 |
| 1,0 T | Melaminharz (wie von Beispiel 7) |
| 1,7 T | Dimethylethanolamin |
| 40,5 T | vollentsalztes Wasser |

Es wurde gearbeitet wie im Beispiel 7, wobei jedoch 100 T des vernetzenden Bindemittels aus Beispiel 3 eingesetzt wurden. Das Vernetzungsverhältnis betrug :

Harz von Beispiel 3 : B5 : B6 : Melaminharz = 70 : 20 : 9 : 1.

Gitterschnitt-Test, Lösemittel-Wischtest, Tiefziehfähigkeits-Test und Pasteurisation ergaben die gleichen Ergebnisse wie in Beispiel 7. Die Schlagbiegung war sehr gut.

Beispiel 9

| Rezeptur | |
|---|---|
| 29,8 T | B5 |
| 10,8 T | B6 |
| 1,0 T | Melaminharz (wie Beispiel 7) |
| 1,7 T | Dimethylethanolamin |
| 47,6 T | vollentsalztes Wasser |

Es wurde gearbeitet wie im Beispiel 7, wobei jedoch 100 T des vernetzenden Bindemittels aus Beispiel 2 eingesetzt wurden. Auch hier betrug das Vernetzungsverhältnis 70 : 20 : 9 : 1. Es wurden die gleichen Ergebnisse wie im Beispiel 7 erzielt, wobei die Schlagbiegung sehr gut war.

Beispiel 10

| Rezeptur | |
|---|---|
| 29,5 T | B5 |
| 10,7 T | B6 |
| 1,0 T | Melaminharz (wie Beispiel 7) |
| 1,6 T | Dimethylethanolamin |
| 44,3 T | vollentsalztes Wasser |

Es wurde gearbeitet wie im Beispiel 7, wobei jedoch 100 T des vernetzenden Bindemittels aus Beispiel 1 eingesetzt wurden. Auch hier erhielt man ein Vernetzungsverhältnis von 70 : 20 : 9 : 1.

Die durchgeführten Tests ergaben die gleichen Ergebnisse wie im Beispiel 7. Die Schlagbiegung war sehr gut.

Die Prüfung der 60er Sikke auf dem Näpfchen war in Ordnung.

Die Pasteurisation nach 30 Min. bei 85°C in Wasser war in Ordnung.

Die erhaltenen Ergebnisse sind in der folgenden Tabelle aufgeführt:

| Versuchs-Nr.: | Beispiel 7 | Beispiel 8 | Beispiel 9 | Beispiel 10 |
|---|---|---|---|---|
| Schichtdicke : | 6,7 µm | 6,8 µm | 6,9 µm | 6,9 µm |
| Viskosität DIN 53221 | 38 '' | 40 '' | 56 '' | 57 '' |
| pH - Wert : | ca. 5,8 | ca. 6,0 | ca. 6,5 | ca. 6,5 |
| Einbrennbedingungen : (Substrat: E-Blech bzw. Weißblech) | | Generell 12 Min. 200 °C | | |
| Lösemittel-Wischtest | > 50 | > 50 | > 50 | > 50 |
| Tiefziehfähigkeit | i.O. | i.O. | i.O. | i.O. |
| Schlagbiegung : | gut | sehr gut | sehr gut | sehr gut |
| nach Pasteurisation : 30 Min. 85 °C $H_2O$: Gitterschnitt | i.O. | i.O. | i.O. | i.O. |
| 60er Sikke | i.O. | i.O. | i.O. | i.O. |

i.O. = in Ordnung

## Patentansprüche

1. Vernetzendes filmbildendes Bindemittel für Beschichtungssysteme, erhältlich durch Pfropfcopolymerisation in einem oder mehreren Lösemitteln von
   A) 10 bis 60 Gewichtsteilen eines oder mehrerer Hydroxylalkyl- und/oder Alkoxyalkylamide von $\alpha,\beta$-olefinisch ungesättigten Mono- und/oder Dicarbonsäuren, wobei die Hydroxy- oder Alkoxygruppe direkt an das an den Amidstickstoff gebundene Kohlenstoffatom der Alkylgruppe gebunden ist, die im Gemisch mit einem oder mehreren radikalisch polymerisierbaren, ethylenisch ungesättigten Monomeren, die keine sauren Gruppen aufweisen, vorliegen können, unter Zusatz von 0,5 bis 15 Gew.% eines oder mehrerer Radikalinitiatoren, bezogen auf das Gewicht der eingesetzten Monomeren in Gegenwart von
   B) 40 bis 90 Gewichtsteilen eines oder mehrerer urethangruppenfreier Epoxidharze mit einem Epoxidäquivalentgewicht von 180 bis 5000,
   wobei sich die Gewichtsteile von A) und B) zu 100 Gewichtsteilen addieren.

2. Verfahren zur Herstellung eines vernetzenden filmbildenden Bindemittels für Beschichtungssysteme, **dadurch gekennzeichnet,** daß man in einem oder mehreren Lösemitteln
   A) 10 bis 60 Gewichtsteile eines oder mehrerer Hydroxylalkyl- und/oder Alkoxyalkylamide von $\alpha,\beta$-olefinisch ungesättigten Mono- und/oder Dicarbonsäuren, wobei die Hydroxy- oder Alkoxygruppe

direkt an das an den Amidstickstoff gebundene Kohlenstoffatom der Alkylgruppe gebunden ist, die im Gemisch mit einem oder mehreren radikalisch polymerisierbaren, ethylenisch ungesättigten Monomeren, die keine sauren Gruppen aufweisen, vorliegen können, unter Zusatz von 0,5 bis 15 Gew.% eines oder mehrerer Radikalinitiatoren, bezogen auf das Gewicht der eingesetzten Monomeren in Gegenwart von

B) 40 bis 90 Gewichtsteilen eines oder mehrerer urethangruppenfreier Epoxidharze mit einem Epoxidäquivalentgewicht von 180 bis 5000,

wobei sich die Gewichtsteile von A) und B) zu 100 Gewichtsteilen addieren, polymerisiert.

**3.** Vernetzendes Bindemittel und Verfahren nach Anspruch 1 oder 2, dadurch gekennzeichnet, daß die zusätzlichen radikalisch polymerisierbaren, ethylenisch ungesättigten Monomeren, die keine sauren Gruppen aufweisen, der Komponente A), in einer Menge von 10 bis 70 Gew%, bezogen auf das Gewicht der gesamten Monomeren der Komponente A) eingesetzt werden, jedoch in einer derartigen Menge, daß die Summe der Komponenten A) und B) mindestens 5 Gew% der Hydroxyalkyl- und/oder Alkoxyalkylamide enthält.

**4.** Vernetzendes Bindemittel und Verfahren nach einem der vorhergehenden Ansprüche, dadurch gekennzeichnet, daß die zusätzlichen radikalisch polymerisierbaren, ethylenisch ungesättigten Monomeren, die keine sauren Gruppen aufweisen, der Komponente A), einen Anteil von 0,1 bis 10 Gew%, bezogen auf das Gewicht der gesamten Monomeren der Komponente A) an zwei- oder mehrfach ungesättigten Monomeren enthalten.

**5.** Vernetzendes Bindemittel und Verfahren nach einem der vorhergehenden Ansprüche, dadurch gekennzeichnet, daß die Epoxidharze der Komponente B) epoxidgruppenhaltige Polyglycidylether aromatischer Dihydroxyverbindungen mit einer gewichtsmittleren Molmasse von 300 bis 8000 sind.

**6.** Vernetzendes Bindemittel und Verfahren nach einem der vorhergehenden Ansprüche, dadurch gekennzeichnet, daß die Radikalinitiatoren organische Peroxide sind.

**7.** Wasserverdünnbares Beschichtungsmittel enthaltend 20 bis 90 Gew% eines oder mehrerer der vernetzenden Bindemittel nach einem der Ansprüche 1 und 3 bis 6, und 10 bis 80 Gew% eines oder mehrerer säurefunktioneller filmbildender Bindemittel.

**8.** Wasserverdünnbares Beschichtungsmittel nach Anspruch 7, enthaltend ein oder mehrere säurefunktionelle filmbildende Bindemittel auf der Basis von Polyesterharzen, Acrylatharzen, Epoxidharzen und/oder Polyurethanen, mit einem Zahlenmittel der Molmasse von 500 bis 20000, einer Säurezahl von 10 bis 250 und einer Hydroxylzahl von 15 bis 400.

**9.** Wasserverdünnbares Beschichtungsmittel nach Anspruch 7 oder 8, enthaltend bis zu 10 Gew%, bezogen auf den Festkörpergehalt an vernetzendem Bindemittel und säurefunktionellem Bindemittel, eines Vernetzers auf der Basis von Phenol- und/oder Amin-Formaldehyd-Kondensationsharzen und/oder blockierten Isocyanaten.

**10.** Wasserverdünnbares Beschichtungsmittel nach Anspruch 7, 8 oder 9, enthaltend lacknübliche Hilfsmittel, Pigmente und/oder Füllstoffe.

**11.** Verwendung der vernetzenden Bindemittel nach einem der Ansprüche 1 und 3 bis 6 in wasserverdünnbaren Beschichtungssystemen.

**12.** Verwendung der wasserverdünnbaren Beschichtungsmittel nach einem der Ansprüche 7 bis 10 zur Dosenlackierung.

Europäisches Patentamt

# EUROPÄISCHER RECHERCHENBERICHT

Nummer der Anmeldung

EP 92 11 2477

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| P,X | US-A-5 051 470 (JAMES T.K. WOO ET AL.)<br>* Ansprüche *<br>* Beispiele *<br>* Spalte 6, Zeile 56 - Spalte 7, Zeile 35 *<br>--- | 1-3,5-6 | C09D151/08<br>C08L51/08<br>C08F283/10<br>//(C08F283/10, 220:58) |
| X | DATABASE WPIL<br>Derwent Publications Ltd., London, GB;<br>AN 89-125347<br>& JP-A-1 069 668 (DAINIPPON INK CHEM KK) 15. März 1989<br>* Zusammenfassung *<br>--- | 1-3 | |
| A | US-A-3 378 601 (SHIGEYOSHI TANAKA ET AL.)<br>* Ansprüche *<br>* Beispiele 1-5 *<br>----- | 1-3 | |

RECHERCHIERTE SACHGEBIETE (Int. Cl.5 )

C08F
C09D
C08L

Der vorliegende Recherchenbericht wurde für alle Patentansprüche erstellt

| Recherchenort | Abschlußdatum der Recherche | Prüfer |
|---|---|---|
| DEN HAAG | 08 OKTOBER 1992 | PERSSON E.K. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPO FORM 1503 03.82 (P0403)